# FASCICULE DE BREVET EUROPEEN

(11) **EP 2 911 818 B1**
(45) Date de publication et mention de la délivrance du brevet: **17.05.2017**
(21) Numéro de dépôt: 13789883.9
(22) Date de dépôt: 24.10.2013
(51) Int. Cl.: B23B 31/11, B23B 31/00, F16D 1/10, F16D 1/108

(54) **ENSEMBLE DE SERRAGE ET DE FIXATION DE PIECES MALE ET FEMELLE EMMANCHEES**
ANORDNUNG ZUM SPANNEN UND SICHERN VON STECKER- UND BUCHSENTEILEN
ASSEMBLY FOR TIGHTENING AND SECURING MALE AND FEMALE PARTS FITTED TOGETHER

(30) Priorité: 25.10.2012 FR 1260186
(43) Date de publication de la demande: 02.09.2015
(73) Titulaire: SECO-E.P.B. (Société par Actions Simplifiée), 67330 Bouxwiller (FR)
(72) Inventeur: FREYERMUTH, Alain, F-67350 Pfaffenhoffen (FR); OSTERMANN, Mathieu, F-67310 Allenwiller (FR); GROLL, Yannick, F-67370 Reitwiller (FR); KRUMHORN, Pascal, F-67350 Dauendorf (FR)
(74) Mandataire: Klöfver, Jörgen
(86) Numéro de dépôt international: PCT/FR2013/052548
(87) Numéro de publication internationale: WO 2014/064393

(56) Documents cités:
- DE-C- 53 508
- US-A1- 2008 054 575

## Description

La présente invention se rapporte au domaine des systèmes de montage d'un outil sur une machine et plus particulièrement aux systèmes de fixation d'un outil, tel un outil de coupe, et son porte-outil ou un porte-outil sur une machine rotative.

Actuellement, la fixation entre deux pièces que peuvent être un outil et un porte-outil ou un porte-outil et une machine est réalisée par emmanchement de l'extrémité d'une première des pièces qui réalise une extrémité mâle dans l'extrémité de la seconde des pièces qui forme une extrémité femelle. Compte tenu de la précision recherchée lors du montage et de la fixation de l'outil sur la machine par l'intermédiaire du porte-outil, il est impératif que l'ajustement de ces pièces entre elles soit opéré au plus serré pour éviter tout jeu existant entre les pièces pouvant entraîner une vibration lors de leur fonctionnement.

Pour assurer un tel ajustement serré, une première solution consiste en un dimensionnement particulier des pièces mâles et femelles. L'extrémité de la pièce qui forme l'élément mâle présente alors un diamètre extérieur très faiblement supérieur au diamètre intérieur de l'ouverture de l'élément femelle dans lequel cet élément mâle est inséré. Cette fixation par insertion des deux pièces est alors réalisée par frettage.

Une autre solution est proposée par la publication de la demande de brevet US 2008/0247832. Cette solution permet de s'affranchir de toute étape de chauffage en faisant intervenir un élément supplémentaire formé par une tige filetée portée traversante par l'extrémité d'une des pièces et destiné à être insérée dans un orifice taraudé complémentaire du filetage positionné à l'intérieur de l'orifice de l'élément femelle. Cette tige filetée est ainsi montée libre en rotation et fixe en translation avec l'extrémité de la pièce qui la porte. L'extrémité de la tige filetée qui n'est pas insérée dans l'orifice taraudé est accessible pour un utilisateur pour permettre la rotation axiale de la tige filetée et donc permettre, lors de l'emmanchement de l'extrémité de la pièce mâle dans la pièce femelle, un rapprochement et une fixation maintenue serrée des pièces ensemble. Cependant une telle solution présente l'inconvénient de générer une déformation des pièces qui supportent, d'une part, une force de frottement au niveau des surfaces périphériques et, d'autre part, une force de traction au niveau de l'axe de la tige filetée qui opère un serrage des pièces entre elles. Une telle déformation des pièces est alors préjudiciable à la qualité de la fixation des pièces entre elles et peut être à l'origine d'une casse de la fixation. De plus, une telle construction présente également comme inconvénient, lors de contraintes, de ne pas être en mesure d'empêcher un décollement ou un détachement entre l'outil et le porte-outil au niveau de la périphérie de la jonction entre ces pièces.

Le document US 2008/0054575 propose une solution de fixation entre un outil et un porte-outil faisant intervenir un anneau permettant le serrage de ses pièces. La mise en place de cet anneau de serrage et son maintien en position est opéré par une pièce de blocage en translation pouvant être réalisée par un disque de clipsage, un anneau torique ou un écrou. Toutefois, dans les différentes réalisations proposées par ce document, le maintien en position de l'anneau de serrage fait intervenir une pièce de blocage spécifiquement usinée et dédiée à cette fonction.

La publication DE 53508 propose également un mécanisme de blocage de deux pièces de type mâle-femelle associées entre elles correspondant à l'ensemble selon le preambule de la revendication 1. Ce mécanisme fait intervenir un élément supplémentaire ajouté lors de l'association complémentaire des pièces mâle et femelle et comprenant une interface adaptée pour interagir au niveau d'une gorge spécifiquement usinée sur le pourtour d'une des deux pièces, mâle et femelle, à maintenir associées. Le mécanisme de blocage impose ici aussi une pièce de blocage qui impacte la structure des pièces maintenue serrées.

La présente invention a pour but de pallier ces inconvénients en proposant un système de fixation de pièces ensemble permettant de s'affranchir des problèmes de déformation et facilitant le montage serré des pièces entre elles, tout en réalisant un blocage en translation d'un anneau de serrage de pièces complémentaires sans utilisation d'un élément spécifiquement dédié à cette fonction.

L'invention a ainsi pour objet un ensemble de serrage et de fixation d'un emmanchement d'une première pièce mâle avec une seconde pièce femelle de formes selon la première revendication.

L'invention concerne également un procédé de montage d'une première pièce mâle avec une seconde pièce femelle de formes complémentaires par l'intermédiaire d'un ensemble de serrage et de fixation selon l'invention, caractérisé en ce que le procédé comprend notamment :
- une étape de positionnement des pièces mâle et femelle, l'une par rapport à l'autre,
- une étape de mise en contact du moyen annulaire avec la périphérie de la pièce complémentaire à celle qui porte le moyen annulaire,
- une étape de pivotement du moyen annulaire par rapport à la périphérie de la pièce complémentaire à celle qui porte le moyen annulaire.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

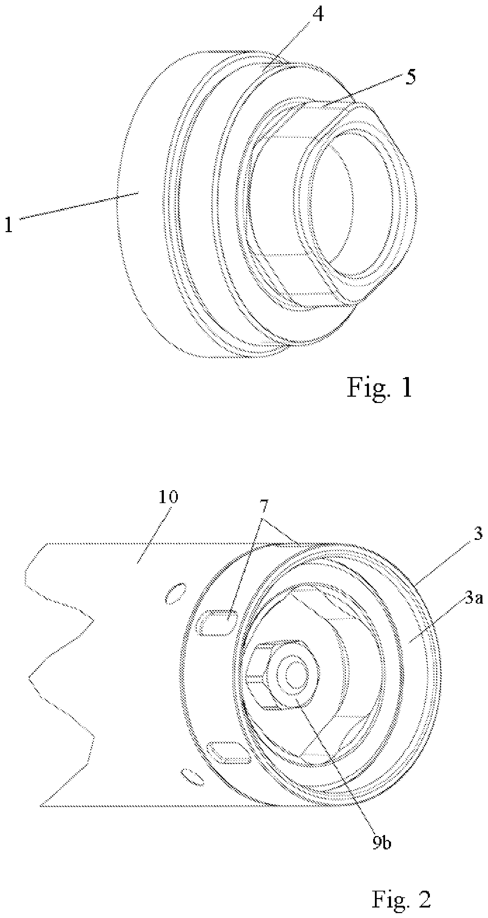

- la figure 1 se rapporte à une représentation cavalière schématique d'un exemple de pièce mâle de l'ensemble de serrage de l'invention,
- la figure 2 se rapporte à une représentation cavalière schématique d'un exemple de pièce femelle de l'ensemble de serrage de l'invention,
- la figure 3 se rapporte à une représentation schématique d'une section des pièces de l'ensemble de serrage de l'invention selon un plan perpendiculaire à l'axe d'emmanchement des pièces de l'ensemble de serrage,
- la figure 4 se rapporte à une représentation schématique d'une section d'un premier exemple de réalisation des pièces de l'ensemble de serrage de l'invention selon l'axe de fixation d'emmanchement des pièces de l'ensemble de serrage,
- la figure 5 se rapporte à une représentation schématique d'une section d'un second exemple de réalisation des pièces de l'ensemble de serrage de l'invention selon l'axe de fixation d'emmanchement des pièces de l'ensemble de serrage
- la figure 6 se rapporte à une représentation schématique d'une section d'un troisième exemple de réalisation des pièces de l'ensemble de serrage de l'invention selon l'axe de fixation d'emmanchement des pièces de l'ensemble de serrage,
- la figure 7 se rapporte à une représentation schématique d'une section d'un quatrième exemple de réalisation des pièces de l'ensemble de serrage de l'invention selon l'axe de fixation d'emmanchement des pièces de l'ensemble de serrage
- la figure 8 se rapporte à une représentation schématique d'une section d'un cinquième exemple de réalisation des pièces de l'ensemble de serrage de l'invention selon l'axe de fixation d'emmanchement des pièces de l'ensemble de serrage.

La présente invention se rapporte à un ensemble de serrage et de fixation d'une première pièce mâle 1 avec une seconde pièce femelle 2 de formes complémentaires, l'emmanchement comportant au moins une surface de contact de la première pièce 1 avec la seconde pièce, caractérisé en ce que l'ensemble comprend également au moins un moyen annulaire 3 monté sur la périphérie d'une des deux pièces, ce moyen annulaire 3 fonctionnant pour être solidaire en translation avec la pièce sur laquelle le moyen annulaire 3 est monté lorsque le moyen annulaire 3 entre en butée avec la pièce sur laquelle ce moyen 3 est monté, et arrangé pour interagir avec une surface périphérique 4 de la pièce complémentaire lors d'une rotation du moyen annulaire 3 par rapport à la pièce complémentaire, le moyen annulaire 3 étant maintenu en translation entre, d'une part, la butée de la pièce sur laquelle ce moyen 3 est monté et, d'autre part, le bord d'une structure porteuse 10 à laquelle est fixée la pièce sur laquelle le moyen 3 est monté. L'utilisation d'une structure porteuse 10 pour opérer un blocage en translation du moyen annulaire 3 permet de s'affranchir du montage d'un élément spécifiquement dédié à cette fonction. Cette structure porteuse 10 est ainsi préférentiellement un élément structurel de l'outil ou du porte-outil.

La surface de contact qui réalise cet emmanchement peut se rapporter à une surface de contact périphérique 5, par exemple de type radiale par rapport l'axe de l'emmanchement, ou bien à une surface de contact sensiblement plane selon un plan perpendiculaire à l'axe de l'emmanchement, c'est-à-dire formée par les extrémités en contact de chacune des pièces de l'emmanchement.

Il convient de noter que le moyen annulaire 3 peut aussi bien être un anneau, par exemple une bague, monté ou intégré à une extrémité d'une des deux pièces, mâle 1 ou femelle 2, qu'un élément comportant une lèvre annulaire 3a montée ou intégrée à l'extrémité d'une des deux pièces.

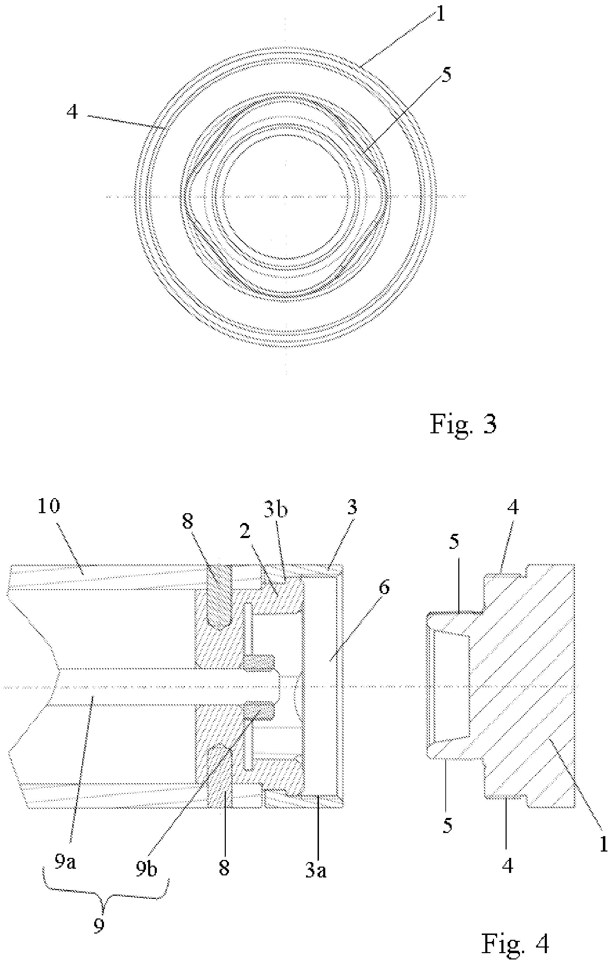

La partie 3b du moyen annulaire 3 destinée à entrer en butée avec la pièce sur laquelle le moyen annulaire 3 est monté, peut être réalisée par le bord 3b d'un épaulement porté par le moyen annulaire 3, comme cela est représenté sur les exemples de réalisation des figures 4, 5 et 6. Alternativement, la partie du moyen annulaire 3 destinée à entrer en butée peut être réalisée par tout autre bord adapté susceptible de limiter le déplacement axial du moyen annulaire 3 par rapport à la pièce sur laquelle ce moyen 3 est monté.

Les pièces, respectivement mâle 1 et femelle 2, de l'invention se rapporte à des pièces d'outils, par exemple d'outils de coupe, ou de porte-outils, voire également à des pièces de machine destinées à fixer un outil et/ou un porte-outil. Selon une particularité, l'ensemble de l'invention est adapté pour un montage sur des machines fournissant un mouvement rotatif autour d'un axe formé par l'axe de l'outil.

Dans le cadre de l'invention, l'interaction mâle-femelle entre les deux pièces de l'ensemble de serrage de l'invention peut être opérée par toute complémentarité de formes connues, notamment concernant la forme des sections respectives des pièces mâle 1 et femelle 2. Un exemple non-limitatif de formes complémentaires qui peut être utilisé en combinaison avec l'ensemble de serrage de l'invention est ainsi une section des pièces mâle 1 et femelle 2 de type polylobée comportant, éventuellement, une ou plusieurs facettes coniques.

Selon un avantage de l'invention, la construction de l'interaction mâle-femelle avec une section de type polylobée comportant des facettes planes et coniques permet la réalisation d'un système de montage avec détrompeur ou d'un système de détrompage. Un tel arrangement permet ainsi, par exemple, un montage selon deux positions alternatives à 180°, selon trois positions alternatives à 120°, selon quatre positions alternatives à 90°, selon six positions alternatives à 60°, etc.

Selon un mode de réalisation préféré de l'invention, l'interaction mâle-femelle entre les deux pièces est effectuée selon un axe de translation qui correspond à l'axe de rotation transmise par la machine à l'outil et/ou au porte-outil.

Selon un mode de réalisation préféré de l'invention, le moyen annulaire 3 de l'ensemble de serrage de l'invention est monté fixe en translation et fou en rotation avec la pièce sur laquelle le moyen 3 est monté. Cet arrangement particulier permet une interaction du moyen annulaire 3 avec une surface périphérique 4 de la pièce complémentaire tout en autorisant une mobilité indépendante de la pièce qui porte le moyen annulaire 3 dans au moins un plan. Cette mobilité indépendante, c'est-à-dire cette rotation, du moyen annulaire 3 par rapport à la pièce qui la porte permet ainsi un actionnement de l'ensemble de fixation et de serrage de l'invention qui soit adapté pour des pièces qui ne peuvent être déplacées par rapport à la pièce complémentaire lors du serrage ou de la fixation.

Selon un exemple de mode de construction non-limitatif de l'invention, le moyen annulaire 3 est monté sur la pièce qui le porte par l'intermédiaire d'un roulement à billes ou encore d'un épaulement au niveau duquel le moyen annulaire 3 serait inséré.

Selon une particularité de réalisation, le bord intérieur du moyen annulaire 3, par exemple le bord intérieur d'une lèvre 3a du moyen annulaire 3, comporte un taraudage dont le pas de vis est identique au pas d'un filetage porté par une surface périphérique 4 de la pièce complémentaire avec laquelle le moyen annulaire 3 interagit. Cet arrangement est un exemple de réalisation qui permet une interaction par vissage du moyen annulaire 3 sur une surface périphérique 4 de la pièce complémentaire afin d'assurer, d'une part, un coulissement de la pièce mâle 1 par rapport à la pièce femelle 2 et, d'autre part, un serrage qui soit progressif et contrôlé en fonction de l'importance du vissage du moyen annulaire 3 par rapport à la surface périphérique 4 filetée de la pièce complémentaire.

Pour optimiser le serrage, l'ensemble de serrage et de fixation de l'invention peut être caractérisé en ce que le moyen annulaire 3 comprend une surface d'interaction 7 avec un outil de serrage formé par au moins une arête.

Selon un particularité non-limitative de l'invention, le moyen annulaire comporte un moyen de blocage du moyen annulaire 3 destiné à interagir avec un élément complémentaire porté par une surface périphérique 4 de la pièce complémentaire. Selon un exemple de réalisation ce moyen de blocage sur un élément complémentaire peut être formé par un moyen clipsable ou encliquetable de type connu. Lorsque le moyen annulaire 3 présente un jeu dans son interaction de serrage avec la surface périphérique 4 de la pièce complémentaire, ce moyen de blocage permet d'éviter un desserrage accidentel des pièces mâle et femelle sous l'action du mouvement de rotation transmis par la machine.

Selon un mode de réalisation préféré de l'ensemble de serrage de l'invention, la surface de coulissement 3a du moyen annulaire 3 contre la surface périphérique 4 de la pièce complémentaire est disposée à proximité de la surface de frottement 5 de la première pièce mâle 1 avec la seconde pièce femelle 2. La surface de coulissement du moyen annulaire 3 contre la surface périphérique 4 de la pièce complémentaire réalise une surface sensiblement cylindrique pouvant être définie par un premier rayon R1 par rapport l'axe de rotation formant le centre du cylindre. Bien que, du fait des formes particulières que peuvent avoir les pièces mâle 1 et femelle 2, la surface de frottement 5 de la première pièce mâle 1 contre la seconde pièce femelle 2 ne s'inscrit pas impérativement dans un cylindre, cette surface de frottement peut toutefois être assimilée à une surface cylindrique moyenne ou pondérée pouvant être définie par un second rayon R2 par rapport l'axe de rotation formant le centre du cylindre. Alternativement, la surface de frottement 5 de la première pièce mâle 1 contre la seconde pièce femelle 2 peut également être définie par rapport une distance R2 qui la sépare de l'axe de rotation générée par la machine. Dans ces conditions, la proximité de la surface de coulissement 3a et de la surface de frottement 5 ainsi définies correspond alors à des valeurs des rayons ou distance R1 et R2 sensiblement proche. Cette proximité doit être suffisante pour limiter, voire éviter, une déformation ou une cassure par torsion des pièces mâle 1 et femelle 2, du fait, d'une part, de la force de traction exercée par le coulissement du moyen annulaire 3 contre la surface périphérique 4 de la pièce complémentaire et, d'autre part, de la force de frottement de la première pièce mâle 1 contre la seconde pièce femelle 2.

Une particularité de l'ensemble de serrage de l'invention est qu'il autorise la présence d'au moins une ouverture 6 entourée par le moyen annulaire 3 pour permettre, par exemple, le positionnement d'une jonction entre les conduits des deux pièces serrées et fixées par l'ensemble de l'invention. Cet ensemble de serrage permet ainsi une communication directe ou indirecte, c'est-à-dire par l'intermédiaire d'un élément supplémentaire, entre les pièces mâle 1 et femelle 2 au travers lui. Cette communication permet ainsi, par exemple, le positionnement d'un système ou d'un conduit de lubrification.

Selon une première possibilité de réalisation de l'ensemble de l'invention, le moyen annulaire 3 est monté fixe en translation avec la pièce femelle 2.

Selon une seconde possibilité de réalisation de l'ensemble de l'invention, le moyen annulaire 3 est monté fixe en translation avec la pièce mâle 1.

Dans le cadre de l'invention, au moins une des pièces, mâle 1 ou femelle 2, est montée sur la structure porteuse 10. Selon une particularité de réalisation, cette structure porteuse 10 peut être réalisée par une structure axiale comportant au moins une partie creuse formant un conduit tubulaire. Ce montage peut également être réalisé par emmanchement et/ou par une interaction taraudage-filetage entre une partie de la face interne de la partie tubulaire de la structure porteuse 10 et la surface périphérique de la pièce, mâle 1 ou femelle 2.

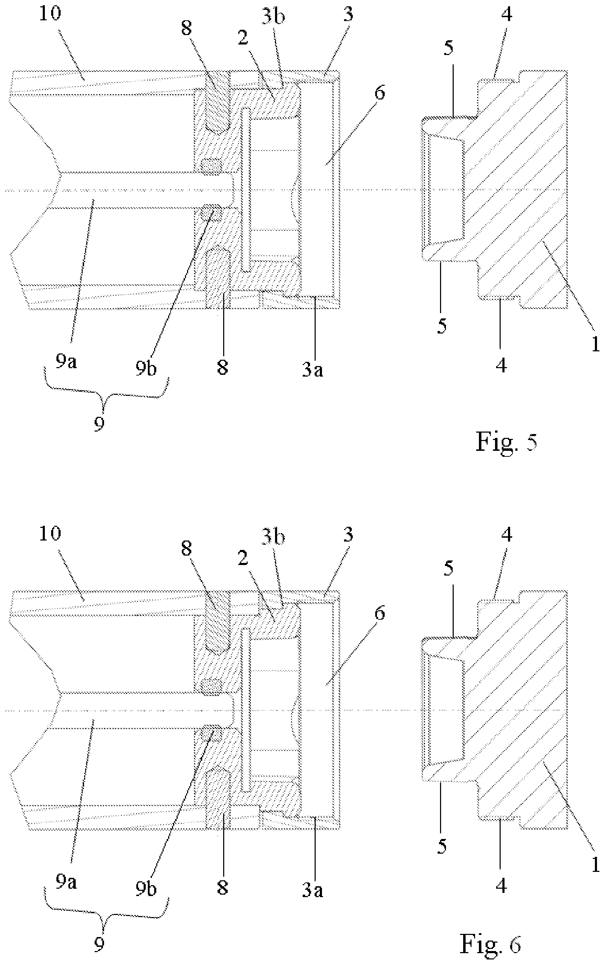

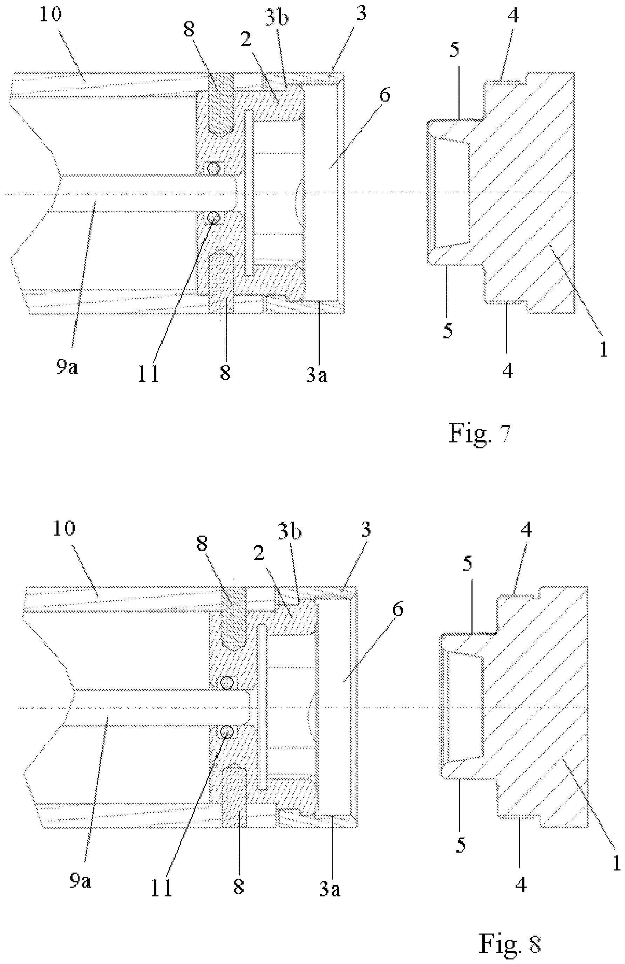

De même, l'emmanchement de la pièce, mâle 1 ou femelle 2, dans la structure porteuse 10 peut faire intervenir un épaulement porté par la pièce emmanchée et qui vient en butée contre une extrémité de la structure porteuse 10, comme représenté par les figures 4, 6 et 8. Alternativement, cet épaulement peut être porté par la structure porteuse 10 et reçoit en butée la pièce, mâle 1 ou femelle 2, emmanchée comme représenté par les figures 5 et 7.

De plus, le blocage, la fixation et/ou la solidarisation de la structure porteuse 10 avec la pièce sur laquelle le moyen annulaire 3 est monté, c'est-à-dire la pièce emmanchée, peut être opérée par une ou plusieurs goupilles (8) qui interagissent radialement par rapport à l'axe d'insertion de la première pièce mâle (1) avec la seconde pièce femelle (2). De façon alternative ou complémentaire, le blocage, la fixation et/ou la solidarisation de la structure porteuse 10 avec la pièce sur laquelle le moyen 3 est monté, c'est-à-dire la pièce emmanchée, peut être opérée par un tirant central 9 qui interagit avec la pièce sur laquelle le moyen 3 est monté et maintient cette pièce bloquée en translation contre la structure porteuse 10. Selon un exemple de construction, ce tirant central 9 est réalisé par un axe 9a comportant une partie filetée qui interagit avec un alésage taraudé 9b. Cet alésage taraudé 9b peut être un élément intégré à la pièce, mâle 1 ou femelle 2, montée sur la structure porteuse 10 comme présenté sur la figure 5 ou un élément associé à la pièce montée sur la structure porteuse 10 comme présenté sur les figures 4 et 6. Selon une particularité de réalisation non-limitative de l'invention, le tirant central 9 et notamment l'axe 9a peut être formé par un conduit tubulaire pour permettre le passage d'un fluide.

Par ailleurs, selon une particularité de réalisation non-limitative de l'invention, l'axe 9a du tirant central 9 interagit avec la pièce, mâle 1 ou femelle 2, montée sur la structure porteuse 10 par l'intermédiaire d'un moyen étanche 11. Ce moyen étanche 11 peut être, par exemple, formé par un anneau torique qui entoure l'axe 9a du tirant central 9 et est disposé dans un logement de la pièce, mâle 1 ou femelle 2, montée sur la structure porteuse 10.

L'invention porte également sur un composant d'un ensemble de serrage et de fixation d'un pour outil de coupe ou d'un porte-outil monté par emmanchement, caractérisé en ce que le composant comporte une structure annulaire 3 solidaire en translation avec l'outil ou le porte-outil sur lequel la structure 3 est montée, et en ce que la structure annulaire 3 comprend une surface 3a destinée à interagir avec une surface périphérique 4 de la pièce complémentaire emmanché avec l'outil ou le porte-outil, lors d'une rotation de la structure annulaire 3 par rapport à la pièce complémentaire.

L'invention porte encore sur un procédé de montage d'une première pièce mâle 1 contre une seconde pièce femelle 2 de formes complémentaires par l'intermédiaire de l'ensemble de serrage et de fixation selon l'invention. Ce procédé est caractérisé en ce qu'il comprend notamment :
- une étape de positionnement des pièces mâle 1 et femelle 2, l'une par rapport à l'autre,
- une étape de mise en contact du moyen annulaire 3 avec la périphérie de la pièce complémentaire à celle qui porte le moyen annulaire 3,
- une étape de pivotement du moyen annulaire 3 par rapport à la périphérie de la pièce complémentaire à celle qui porte.

L'insertion des pièces mâle 1 et femelle 2 peut être débutée indépendamment du serrage puis complétée par le pivotement du moyen annulaire 3 qui sert les deux pièces ensemble, ou bien, alternativement, ce pivotement du moyen annulaire 3 par rapport à la périphérie de la pièce complémentaire est nécessaire pour permettre l'assemblage des pièces mâle 1 et femelle 2.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Ensemble de serrage et de fixation d'un porte-outil avec un outil ou avec une machine comprenant un emmanchement d'une première pièce mâle (1) avec une seconde pièce femelle (2) de formes complémentaires, l'emmanchement comportant au moins une surface de contact de la première pièce avec la seconde pièce, comprenant également au moins un moyen annulaire (3) monté sur la périphérie d'une des deux pièces, ce moyen annulaire (3) fonctionnant pour être solidaire en translation avec la pièce sur laquelle le moyen annulaire (3) est monté lorsque le moyen annulaire (3) entre en butée avec la pièce sur laquelle ce moyen (3) est monté, et arrangé pour interagir avec une surface périphérique (4) de la pièce complémentaire lors d'une rotation du moyen annulaire (3) par rapport à la pièce complémentaire, **caractérisé en ce que** le moyen annulaire (3) est maintenu en translation entre, d'une part, la butée de la pièce sur laquelle ce moyen (3) est monté et, d'autre part, le bord d'une structure porteuse (10) à laquelle est fixée la pièce sur laquelle le moyen (3) est monté.

2. Ensemble de serrage et de fixation selon la revendication 1, **caractérisé en ce que** la fixation de la structure porteuse (10) avec la pièce sur laquelle le moyen (3) est monté, est opérée par une ou plusieurs goupilles (8) qui interagissent radialement par rapport à l'axe d'insertion de la première pièce mâle (1) avec la seconde pièce femelle (2).

3. Ensemble de serrage et de fixation selon une des revendications 1 ou 2, **caractérisé en ce que** la fixation de la structure porteuse (10) avec la pièce sur laquelle le moyen (3) est monté, est opérée par un tirant central (9) qui interagit avec la pièce sur laquelle le moyen (3) est monté et maintient cette pièce bloquée en translation contre la structure porteuse (10).

4. Ensemble de serrage et de fixation selon la revendication 3, **caractérisé en ce que** le tirant central (9) est réalisé par un axe (9a) comportant une partie filetée qui interagit avec un alésage taraudé (9b) porté ou intégré à la pièce, mâle (1) ou femelle (2), montée sur la structure porteuse (10).

5. Ensemble de serrage et de fixation selon la revendication 4, **caractérisé en ce que** l'axe (9a) du tirant central (9) interagit avec la pièce, mâle (1) ou femelle (2), montée sur la structure porteuse (10) par l'intermédiaire d'un moyen étanche (11) formé par un anneau torique qui entoure l'axe (9a) du tirant central (9) et est disposé dans un logement de la pièce, mâle (1) ou femelle (2), fixée à la structure porteuse (10).

6. Ensemble de serrage et de fixation selon une des revendications précédentes, **caractérisé en ce que** le moyen annulaire (3) est monté solidaire en translation et fou en rotation avec la pièce sur laquelle le moyen est monté.

7. Ensemble de serrage et de fixation selon une des revendications précédentes, **caractérisé en ce que** le bord intérieur du moyen annulaire (3) comporte un taraudage dont le pas de vis est identique au pas d'un filetage porté par une surface périphérique (4) de la pièce avec laquelle le moyen annulaire (3) interagit.

8. Ensemble de serrage et de fixation selon une des revendications précédentes, **caractérisé en ce que** le moyen annulaire (3) comporte un moyen de blocage du moyen annulaire (3) destiné à interagir avec un élément complémentaire porté par une surface périphérique (4) de la pièce complémentaire.

9. Ensemble de serrage et de fixation selon une des revendications précédentes, **caractérisé en ce que** la surface de coulissement (3a) du moyen annulaire (3) contre la surface périphérique (3) de la pièce complémentaire est disposée à proximité de la surface de frottement (5) de la première pièce mâle (1) avec la seconde pièce femelle (2).

10. Ensemble de serrage et de fixation selon une des revendications précédentes, **caractérisé en ce que** l'ensemble comprend au moins une ouverture (6) entourée par le moyen annulaire (3) permettant le positionnement d'une jonction entre les conduits des deux pièces serrées et fixées par l'ensemble de serrage.

11. Ensemble de serrage et de fixation selon une des revendications précédentes, **caractérisé en ce que** le moyen annulaire (3) est monté solidaire en translation avec la pièce femelle (2).

12. Ensemble de serrage et de fixation selon une des revendications précédentes, **caractérisé en ce que** le moyen annulaire (3) est monté solidaire en translation avec la pièce mâle (1).

13. Ensemble de serrage et de fixation selon une des revendications précédentes, **caractérisé en ce que** le moyen annulaire (3) comprend une surface d'interaction avec un outil de serrage formé par au moins une arête (7).

14. Procédé de montage d'une première pièce mâle (1) avec une seconde pièce femelle (2) de formes complémentaires par l'intermédiaire d'un ensemble de serrage et de fixation selon une des revendications 1 à 13, **caractérisé en ce que** le procédé comprend notamment :
- une étape de positionnement des pièces mâle (1) et femelle (2), l'une par rapport à l'autre,
- une étape de mise en contact du moyen annulaire (3) avec la périphérie de la pièce complémentaire à celle qui porte le moyen annulaire (3),
- une étape de pivotement du moyen annulaire (3) par rapport à la périphérie de la pièce complémentaire à celle qui porte le moyen annulaire (3).

## Patentansprüche

1. Klemm- und Befestigungsaufbau eines Werkzeugträgers mit einem Werkzeug oder mit einer Maschine, welche/s eine Verbindung von einem ersten zapfenartigen Teil (1) mit einem zweiten buchsenartigen Teil (2) aufweist, die komplementäre Formen haben, wobei die Verbindung mindestens eine Kontaktfläche des ersten Teils mit dem zweiten Teil aufweist, und weiterhin mit mindestens einem ringartigen Element (3), welches auf dem Umfang eines der beiden Teile montiert ist, wobei das ringartige Element (3) dazu dient, sich mit dem Teil, auf welchem das ringartige Element (3) montiert ist, zu bewegen, wenn das ringartige Element (3) mit dem Teil, auf welchem das Element (3) montiert ist, in Anschlag tritt, und so angeordnet ist, dass es während einer Drehung des ringartigen Elements (3) gegenüber dem komplementären Teil mit einer Umfangsfläche (4) des komplementären Teils in Eingriff tritt, **dadurch gekennzeichnet, dass** das ringartige Element (3) einerseits zwischen dem Anschlag des Teils, auf welchem das Element (3) montiert ist, und andererseits dem Rand einer Tragstruktur (10), auf welcher das Teil, auf welchem das Element (3) montiert ist, befestigt ist, in beweglich gehaltert ist.

2. Klemm- und Befestigungsaufbau nach Anspruch 1, **dadurch gekennzeichnet, dass** die Befestigung der Tragstruktur (10) mit dem Teil, auf welchem das Element (3) montiert ist, durch einen oder eine Mehrzahl von Stiften (8) bewirkt wird, welche radial gegenüber der Einschubachse des ersten zapfenartigen Teils (1) mit dem zweiten buchsenartigen Teil (2) zusammenwirken.

3. Klemm- und Befestigungsaufbau nach einem der Ansprüche 1 oder 2, **dadurch gekennzeichnet, dass** die Befestigung der Tragstruktur (10) mit dem Teil, auf welchem das Element (3) montiert ist, durch eine zentrale Zugstange (9) bewirkt wird, welche mit dem Teil, auf welchem das Element (3) montiert ist, zusammenwirkt und dieses blockierte Teil gegenüber der Tragstruktur (10) bewegbar hält.

4. Klemm- und Befestigungsaufbau nach Anspruch 3, **dadurch gekennzeichnet, dass** die zentrale Zugstange (9) durch eine Welle (9a) realisiert ist, welche ein Gewindeteil aufweist, welches mit einer Gewindebohrung (9b) zusammenwirkt, welche von dem zapfenartigen (1) oder buchsenartigen (2) Teil getragen wird oder darin integriert ist, welches auf der Tragstruktur (10) befestigt ist.

5. Klemm- und Befestigungsaufbau nach Anspruch 4, **dadurch gekennzeichnet, dass** die Welle (9a) der zentralen Zugstange (9) mit dem zapfenartigen (1) oder buchsenartigen (2) Teil zusammenwirkt, welches auf der Tragstruktur (10) durch das Zwischenglied eines undurchlässigen Elements (11) montiert ist, welches durch einen O-Ring gebildet wird, welcher die Achse (9a) der zentralen Zugstange (9) umgibt und welcher in einem Gehäuse des zapfenartigen (1) oder buchsenartigen (2) Teils, welches an der Tragstruktur (10) befestigt ist, angeordnet ist.

6. Klemm- und Befestigungsaufbau nach einem der vorstehenden Ansprüche, **dadurch gekennzeichnet, dass** das ringartige Element (3) beweglich und sich drehend mit dem Teil, auf welchem das Element montiert ist, montiert ist.

7. Klemm- und Befestigungsaufbau nach einem der vorstehenden Ansprüche, **dadurch gekennzeichnet, dass** der innere Rand des ringartigen Elements (3) ein Innengewinde aufweist, dessen Schraubgewinde identisch zu dem Gewinde eines Schraubengewindes passt, welches auf der Umfangsfläche (4) des Teils, mit welchem das ringartige Element (3) zusammenwirkt, vorgesehen ist.

8. Klemm- und Befestigungsaufbau nach einem der vorstehenden Ansprüche, **dadurch gekennzeichnet, dass** das ringartige Element (3) ein Arretierelement des ringartigen Elements (3) aufweist, welches dazu dient, mit einem komplementären Element, welches auf einer Umfangsfläche (4) des komplementären Teils vorgesehen ist, zusammenzuwirken.

9. Klemm- und Befestigungsaufbau nach einem der vorstehenden Ansprüche, **dadurch gekennzeichnet, dass** die Gleitfläche (3a) des ringartigen Elements (3) gegenüber der Umfangsfläche (3) des komplementären Teils in der Nähe der Reibungsfläche (5) des ersten zapfenartigen Teils (1) zusammen mit dem zweiten buchsenartigen Teil (2) angeordnet ist.

10. Klemm- und Befestigungsaufbau nach einem der vorstehenden Ansprüche, **dadurch gekennzeichnet, dass** der Aufbau mindestens eine Öffnung (6) aufweist, welche von dem ringartigen Element (3) umgeben ist, welche es ermöglicht, eine Verbindung zwischen Durchführungen der beiden durch den Klemm- und Befestigungsaufbau geklemmten und befestigten Teile herzustellen.

11. Klemm- und Befestigungsaufbau nach einem der vorstehenden Ansprüche, **dadurch gekennzeichnet, dass** das ringartige Element (3) bewegbar an dem buchsenartigen Teil (2) montiert ist.

12. Klemm- und Befestigungsaufbau nach einem der vorstehenden Ansprüche, **dadurch gekennzeichnet, dass** das ringartige Element (3) bewegbar an dem zapfenartigen Teil (1) montiert ist.

13. Klemm- und Befestigungsaufbau nach einem der vorstehenden Ansprüche, **dadurch gekennzeichnet, dass** das ringartige Element (3) eine Eingriffsfläche für ein Klemmwerkzeug aufweist, welche durch eine Kante (7) gebildet wird.

14. Verfahren zum Einbau eines ersten zapfenartigen Teils (1) mit einem zweiten buchsenartigen Teil (2) mit komplementären Formen mit Hilfe eines Klemm- und Befestigungsaufbaus nach einem der Ansprüche 1 bis 13, **dadurch gekennzeichnet, dass** das Verfahren insbesondere aufweist:
- einen Schritt zum Positionieren des zapfenartigen (1) und buchsenartigen (2) Teils, eines gegenüber dem anderen,
- einen Schritt zum Inkontaktbringen des ringartigen Elements (3) mit dem Umfang des komplementären Teils zu demjenigen, welches das ringartige Element (3) trägt,
- einen Schritt zum Drehen des ringartigen Elements (3) gegenüber dem Umfang des komplementären Teils zu demjenigen, welches das ringartige Element (3) trägt.

## Claims

1. Clamping and fixing assembly of a tool holder with a tool or with a machine comprising an assembly of a first male part (1) with a second female part (2) of complementary shapes, the assembly comprising at least one contact surface of the first part with the second part also comprising at least one annular means (3) mounted on the periphery of one of the two parts, this annular means (3) operating so as to be integral in translation with the part on which the annular means (3) is mounted when the annular means (3) abuts with the part on which this means (3) is mounted, and arranged to interact with a peripheral surface (4) of the complementary part on rotation of the annular means (3) with respect to the complementary part wherein the annular means (3) is held in translation between, on the one hand, the stop of the part on which this means (3) is mounted, and, on the other hand, the edge of a bearing structure (10) to which the part on which the means (3) is mounted, is fixed.

2. Clamping and fixing assembly according to claim 1 wherein the fixing of the bearing structure (10) with the part on which the means (3) is mounted, is operated by one or more pins (8) which interact radially with respect to the insertion axis of the first male part (1) with the second female part (2).

3. Clamping and fixing assembly according to one of claims 1 or 2 wherein the fixing of the bearing structure (10) with the part on which the means (3) is mounted, is operated by a central pull rod (9) which interacts with the part on which the means (3) is mounted and holds this part blocked in translation against the bearing structure (10).

4. Clamping and fixing assembly according to claim 3 wherein the central pull rod (9) is made by a pin (9a) comprising a threaded part which interacts with a tapped bore (9b) supported or incorporated into the male (1) or female (2) part, mounted on the bearing structure (10).

5. Clamping and fixing assembly according to claim 4 wherein the pin (9a) of the central pull rod (9) interacts with the male (1) or female (2) part mounted on the bearing structure (10) via a sealed means (11) formed by an o-ring which surrounds the pin (9a) of the central pull rod (9) and is arranged in a housing of the male (1) or female (2) part, fixed to the bearing structure (10).

6. Clamping and fixing assembly according to one of the previous claims wherein the annular means (3) is mounted integral in translation and idle in rotation with the part on which the means is mounted.

7. Clamping and fixing assembly according to one of the previous claims wherein the inner edge of the annular means (3) comprises a tapping the screw pitch of which is identical to the pitch of a thread supported by a peripheral surface (4) of the part with which the annular means (3) interacts.

8. Clamping and fixing assembly according to one of the previous claims wherein the annular means (3) comprises a blocking means of the annular means (3) intended to interact with a complementary component supported by a peripheral surface (4) of the complementary part.

9. Clamping and fixing assembly according to one of the previous claims wherein the sliding surface (3a) of the annular means (3) against the peripheral surface (3) of the complementary part is arranged close within proximity of the friction surface (5) of the first male part (1) with the second female part (2).

10. Clamping and fixing assembly according to one of the previous claims wherein the assembly comprises at least one opening (6) surrounded by the annular means (3) allowing positioning of a junction between the conduits of the two parts clamped and fixed by the clamping assembly.

11. Clamping and fixing assembly according to one of the previous claims wherein the annular means (3) is mounted integral in translation with the female part (2).

12. Clamping and fixing assembly according to one of the previous claims wherein the annular means (3) is mounted integral in translation with the male part (1).

13. Clamping and fixing assembly according to one of the previous claims wherein the annular means (3) comprises a surface of interaction with a clamping tool formed by at least one edge (7).

14. Assembly process of a first male part (1) with a second female part (2) of complementary shapes via a tightening and fixing assembly according to one of the claims 1 to 13 wherein the process comprises in particular:
- a stage for positioning the male (1) and female (2) parts with respect to one another,
- a stage for contact of the annular means (3) with the periphery of the part complementary to the one which supports the annular means (3),
- a stage for pivoting the annular means (3) with respect to the periphery of the part complementary to the one which supports the annular means (3).
